# EUROPEAN PATENT APPLICATION

(11) **EP 4 389 370 A1**
(43) Date of publication of application: **26.06.2024**
(21) Application number: 22214934.6
(22) Date of filing: 20.12.2022
(51) Int. Cl.: B25J 15/02

(54) **GRIPPER DEVICE**

(71) Applicant: Kraftverlauf Engineering GmbH & Co. Kg, 12099 Berlin (DE)
(72) Inventor: PAULS, Jan, 12099 Berlin (DE); LADDA, Christian, 12099 Berlin (DE)
(74) Representative: Schulz Junghans Patentanwälte PartGmbB

(57) **Abstract**

The invention relates to a gripper device system (1) comprising the following components:
a base body (2), at least two rotary body assemblies (10), each rotary body assembly (10) comprising a first rotary body (3) and a second rotary body (4), wherein each first rotary body (3) comprises a first axis of rotation (r1) about which the first rotary body (3) is rotatable relative to the base body (2), and each second rotary body (4) comprises a second axis of rotation (r2) about which the second rotary body (4) is rotatable relative to the first rotary body (3) of the respective rotary body assembly (10), wherein the second axis of rotation (r2) of the second rotary body (4) is arranged eccentrically relative to the first axis of rotation (r1) of the first rotary body (3) of the respective rotary body assembly (10), wherein the system (1) comprises a connection device (5) for each second rotary body (4), wherein the connection device (5) is adapted to at least partially form or to have attached to it a gripper finger (6), wherein each connection device (5) comprises a torque-receiving section (7) at which a gripper finger (6) is attachable or at which a gripper finger (6) extends from, wherein the torque-receiving section (7) is arranged eccentrically with respect to the second axis of rotation (r2) of the respective second rotary body (4), and wherein the torque-receiving section (7) is adapted to receive a torque with respect to the second axis of rotation (r2) when gripping an object with the gripper device system (1), wherein the gripper device system (1) further comprises a first drive assembly (9-1) adapted to rotate each first rotary body (3) around its first axis of rotation (r1), wherein the gripper device system (1) comprises a second drive assembly (9-2) adapted to rotate each second rotary body (4) around its second axis of rotation (r2),, wherein the first and second drive assemblies (9-1, 9-2) are arranged to rotate the first rotary bodies (3) and the second rotary bodies (4) of the rotary body assemblies (10) independently of each other so that each torque-receiving section (7) performs a rectilinear translational motion (M1), when the first and second rotary bodies (3, 4) are rotated accordingly.

## Description

### Specification

The invention relates to a gripper device system according to claim 1, the system being configured to execute a rectilinear motion of gripper fingers, based on rotary motions only.

Grippers are important tools in robotic manufacturing applications. Grippers are intended and designed to grip various-shaped objects and transport them to varying locations. On the one hand grippers should be simple in the mechanics but on the other hand, they need to be versatile enough to perform a variety of complex motions. For this reason, may gripper designs have been invented. However, all of these designs sacrifice simplicity of the mechanics for the sake of achieving higher degrees of freedom for executable motions.

The complex mechanics in turn lead to more frequent maintenance a repair. In particularly rectilinear motions of the gripper fingers is goal that is achieved typically by means of spindle drive or the like, which however, requires more built space. The invention sets out to provide a gripper device system that allows for rectilinear motions of the gripper fingers while at the same time offering a compact and robust mechanical design.

The object is achieved by the system having the features of claim 1.

Advantageous embodiments are described in the dependent claims.

According to claim 1 a gripper device system for a gripper device with attachable or attached gripper fingers comprises the following components:
- a base body,
- at least two rotary body assemblies, each rotary body assembly comprising a first rotary body and a second rotary body,
- wherein each first rotary body comprises a first axis of rotation about which the first rotary body is rotatable relative to the base body, and each second rotary body comprises a second axis of rotation about which the second rotary body is rotatable relative to the first rotary body of the respective rotary body assembly,
- wherein the second axis of rotation of the second rotary body is arranged eccentrically, i.e. laterally offset, relative to the first axis of rotation of the first rotary body of the respective rotary body assembly, particularly wherein the second axis of rotation executes a corresponding eccentric motion about the first axis of rotation of the first rotary body of the respective rotary body assembly upon rotation of the first rotary body,
- wherein the system comprises a connection device for at each second rotary body, wherein the connection device is adapted to at least partially form or to have attached to it a gripper finger, wherein each connection device comprises a torque-receiving section at which a gripper finger is attachable or at which a gripper finger extends from, wherein the torque-receiving section at is arranged eccentrically with respect to the second axis of rotation and wherein the torque-receiving section which is adapted to receive a torque with respect to the second axis of rotation when gripping an object with the gripper device system, particularly wherein the torque-receiving section performs a corresponding eccentric motion about the second axis of rotation upon rotation of the second rotary body,
- wherein the gripper device system further comprises a first drive assembly adapted to rotate each first rotary body,
- wherein the gripper device system comprises a second drive assembly adapted to rotate each second rotary body, wherein
the first drive assembly and second drive assembly are arranged to rotate the first rotary bodies and the second rotary bodies of the rotary body assemblies independently of each other so that each torque-receiving section performs a rectilinear translational motion, when the first rotary body and the second rotary body are rotated accordingly.

Particularly, said rectilinear motion is performed relative to the base body. More particularly, the rectilinear motion is performed perpendicular to a plane to the second axes of rotation, when the first and second rotary bodies are rotated accordingly.

The invention allows to perform rectilinear motions of torque-receiving sections by means of only two rotary bodies that are adapted and configured to exclusively perform rotary motions.

By appropriately rotating the rotary bodies, the system allows for a rectilinear motion for individual torque receiving sections of the connection device.

For any robotic application of a gripper, the system according to the invention allows for precise and facile control over the motion of gripper fingers that may be attached to or integrally formed with the torque-receiving section.

A rectilinear motion in turn allows for complexity reduction in path planning for gripper devices. Restrictions regarding possible, i.e. executable, trajectories of the gripper fingers are overcome by the system according to the invention.

The system comprises two rotary assemblies, each of the assemblies comprising a first and a second rotary body. The term "body" in the context of the current specification particularly relates to a rigid structure that is configured to rotate around its respective axis of rotation.

Particularly, the base body is arranged as a motion base relative to which the first and the second rotary bodies rotate and move.

The base body may be configured to be attached to a robotic device, or form a part of a robotic device itself. The base body may be partially hollow to house all or parts of the drive assemblies.

Further, the first and/or second axes of rotation may at least geometrically extend through the base body.

The term "axis of rotation" as well as the term "rotation axis" particularly relates to a geometric axis and not necessary to a physical axle. However, embodiments according to which the axis of rotation comprises a physical axle are comprised in the meaning of the axis of rotation as well.

The connection device may be comprised by the second rotary body.

Each connection device may be formed as a recess and/or a protrusion in the second rotary body to which a gripper finger may connected, in order to fix a gripper finger to the second rotary body.

As such the connection device may be integrally formed with the second rotary body.

According to another embodiment of the invention, the connection device may comprise at least a first and a second portion, wherein the portion is arranged on or comprised by the second rotary body, wherein the second portion comprises the torque-receiving section, particularly wherein the second portion may be configured to be repeatedly releasably attachable to the first portion of the connection device. The first and the second portions may be connectable such that the torque-receiving section is arranged eccentrically to the second axis of rotation.

The torque-receiving section of the connection device is a portion that may be arranged on the second rotary body through which a torque may transmitted. Particularly, said torque may originate from a gripper finger attached to the connection section.

Alternatively, said-torque-receiving section may be comprised by the second portion of the connection device. Particularly, the second portion of the connection device may form a gripper finger at least partially.

The torque-receiving section may be intersected by a longitudinal axis of a gripper finger, such that the gripper finger extending along said longitudinal axis performs an eccentric motion around the second axis of rotation, when the second rotary body is rotated around the second axis of rotation. A gripper finger that is pressed against an object, will transmit a torque via the torque-receiving section relative to the second axis of rotation.

According to the invention, the torque-receiving section is arranged eccentrically with respect to the second axis of rotation for each second rotary body.

According to another embodiment of the invention, the torque-receiving is integrally formed by the connection device.

According to another embodiment of the invention, the connection device comprises a fixation device, such as a screw, a magnetic device, a clamping device, and/or a snap-lock configured to fix a gripper finger to the torque-receiving section. More particularly, the torque-receiving section comprises said fixation device.

According to another embodiment of the invention, a gripper finger intersects with the torque-receiving section, when the system is in an assembled state, wherein accordingly, the first drive assembly and second drive assembly are arranged to rotate the first rotary bodies and the second rotary bodies of the rotary body assemblies independently of each other so that each gripper finger intersecting with the torque-receiving section performs a rectilinear translational motion, when the first rotary body and the second rotary body are rotated accordingly.

The gripper finger may comprise a longitudinal axis, that intersects with the torque-receiving section, when the system is in an assembled state.

The term "assembled state" particularly refers to a gripper device system that comprises gripper fingers, wherein each gripper finger is attached to the connection device, particularly to the torque-receiving section.

Gripper device systems may be equipped with a variety of gripper fingers, depending in the purpose of the gripper device. Therefore, gripper device systems are often times configured and sold as modular systems, wherein gripper fingers may be selected separately and are not comprised by the gripper device system.

Therefore, the gripper device system may not necessarily comprise gripper fingers, as the gripper fingers may be selected and chosen according to an intended application.

Once the gripper fingers are attached to the appropriate portions of the gripper device, the gripper device system may be considered as being in the assembled state.

According to another embodiment of the invention, the first axes of rotation extend parallel to each other.

According to another embodiment of the invention, the second axes of rotation extend parallel to each other.

According to another embodiment of the invention, the first and the second axes of rotation extend parallel to each other.

Without limitation of generality, the direction along which the first and/or the second axes of rotation extend is the z-direction.

Thus, an eccentric motion of the second rotary body and/or the torque-receiving section takes place in an orthogonal plane to said z-direction.

In one embodiment, for each rotary body assembly the first rotary body is arranged between the base body and the second rotary body.

According to another embodiment of the invention, the first and the second drive assemblies are configured and arranged to rotate the first rotary bodies and the second rotary bodies such that the torque-receiving sections perform a rolling motion about a common roll-axis, when the first and second rotary bodies are rotated accordingly, particularly wherein the roll-axis extends parallel to the first axes of rotation, particularly wherein the roll axis coincides with an axis located between the first axes of rotation, more particularly wherein the roll-axis coincides with a center of gravity of the first axes of rotation.

The ability to perform a rolling motion is a consequence of the design of the rotary body assemblies and their drive assemblies.

The rolling motion may be superimposed with the rectilinear translational motion.

The rolling motion particularly is a motion during which that torque-receiving sections - and thus potentially gripper fingers - move laterally around a selectable circle, oval or ellipse line keeping relative distances between the torque-receiving sections constant, while an orientation of the torque-receiving section (and thus potentially attached gripper fingers) for example points toward a center of the circle. This allows rotating objects around an axis that is not comprised by any of the first and or second axes of rotations.

According to another embodiment of the invention, each connection device is associated with an orientation at least along a radial direction with respect to the second axis of rotation of the corresponding second rotary body, wherein the first and the second drive assemblies are configured and arranged to rotate the first rotary bodies and the second rotary bodies such that the orientation of each connection device remains essentially unchanged when performing a translational motion, particularly when performing a rectilinear translational motion.

The radial direction particularly extends within the plane orthogonal to the second axes of rotation.

This kind of motion allows the assembled system to hold an object at a steady orientation while moving the object translationally.

According to another embodiment of the invention, the first drive assembly comprises a motor, particularly only one motor, adapted to rotate all of the first rotary bodies, particularly in a simultaneous fashion.

This embodiment allows for a cost-efficient drive assembly requiring only one motor for operating all first rotary bodies.

According to an alternative embodiment of the invention, the first drive assembly comprises a plurality of motors configured and arranged to independently and individually rotate one or more first rotary bodies of the first rotary bodies, or wherein the motors are configured and arranged to rotate the first rotary bodies in pairs.

This embodiment allows for a plurality of motors that may rotate only a single first rotary body or several first rotary bodies.

The more motors the drive assembly comprises the higher the degrees of freedom regarding an independent control of each first rotary body.

According to another embodiment of the invention, the second drive assembly comprises a motor adapted to rotate all of the second rotary bodies.

This embodiment allows for a cost-efficient drive assembly requiring only one motor for operating all secondary rotary bodies.

According to another embodiment of the invention, the second drive assembly comprises a plurality of motors configured and arranged to independently and individually rotate one or more second rotary bodies of the second rotary bodies, or wherein the motors are configured and arranged to rotate the second rotary bodies in pairs.

This embodiment allows for a plurality of motors that may rotate only a single second rotary body or several second rotary bodies.

The more motors the second drive assembly comprises the higher the degrees of freedom regarding an independent control of each second rotary body.

According to another embodiment of the invention, the first drive assembly is coupled to the first rotary bodies via a transmission.

According to another embodiment of the invention, the second drive assembly is coupled to the second rotary bodies via a transmission.

According to another embodiment of the invention, at least one connection device, particularly all connection devices, comprises or comprise a locking device configured to rigidly attach a gripper finger to the corresponding second rotary body, such that the gripper finger rotates eccentrically around the second axis of the corresponding second rotary body, when the second rotatory body is rotated, wherein a torque received by the gripper finger is relayed to the torque-receiving section of the connection device of the second rotary body, in particular wherein the locking device is adapted to non-rotatably connect the gripper fingers to the connection device.

The locking device may comprise or consist of the fixation device.

The locking device may therefore be selected from the group consisting of:
- a screw connection, configured to fix the gripper finger t the second rotary body,
- a magnetic device, configured to provide a magnetic force for attaching the gripper finger to the second rotary body,
- a clamping device, configured to establish a clamping connection between the gripper finger and the second rotary body,
- a snap-lock, configured to provide a snap-lock connection between the gripper finger and the second rotary body.

The locking device may particularly be configured to fix a gripper finger to the torque-receiving section.

The gripper finger may consequently be adapted to engage with the locking device.

The locking device may be integrally formed with the connection section, or be a separate device that interconnect the gripper finger with the connection device.

According to another embodiment of the invention, the locking device of each second rotary body comprises a first portion and a complementary second portion, wherein the first portion of the locking is comprised by the second rotary body and the second portion is comprised in a corresponding gripper finger at a first end portion of the gripper finger, so that each gripper finger forms a connection, particularly a rotationally fixed connection, with the second rotary body when the first and the second portion of the locking device are connected.

The locking device may be configured to connect at the second axis of rotation, wherein the second portion of the locking device is formed such that the torque-receiving section is then arranged eccentrically with respect to the second axis of rotation.

According to another embodiment of the invention, the second portion of the locking device comprises the torque-receiving section.

According to another embodiment of the invention, the gripper device system comprises at least one gripper finger, or wherein the system comprises a gripper finger for each connection device of the system.

While in preceding embodiments the gripper finger may not be part of the embodiment, this embodiment explicitly allows for the gripper finger to part of the any embodiment according to the invention.

According to another embodiment of the invention, to each second rotary body, particularly to each connection device a gripper finger is attached, such that each gripper finger rotates eccentrically with respect to the corresponding second axis, when the second rotary body rotates around its second axis, wherein a torque received by the gripper finger is relayed to the torque-receiving section of the connection device of the second rotary body.

This embodiment specifies the eccentric motion of the gripper fingers when the gripper fingers are attached to the second rotary body.

Particularly, each gripper finger may be attached to, e.g. in direct contact with the torque-receiving section, such that any torque is transmitted via said torque-receiving section, particularly only via said torque receiving section.

As the invention requires the torque-receiving section to rotate eccentrically with respect to the second axis, any gripper finger attached to said torque-receiving section performs the same motion. This in turn allows for rectilinear translational motions of the gripper fingers.

According to another embodiment of the invention, the gripper fingers are integrally formed with the corresponding connection device, particularly such that each gripper finger rotates eccentrically with respect to the corresponding second axis, when the second rotary body rotates around its second axis, wherein a torque received by the gripper finger is relayed to the torque-receiving section of the connection device of the second rotary body. Thus, even though the gripper fingers may be integrally formed with the torque-receiving section, any torque may be relayed via said section to the second rotary body.

Obviously, for all embodiments, torques may be transmitted from a gripper finger via the torque-receiving section to the second rotary body as well as from the second rotary body via the torque-receiving section to a gripper finger.

According to another embodiment of the invention, each gripper finger comprises a longitudinal axis that extends through the torque-receiving section, such that when the second rotary body is rotated, the longitudinal axis of the gripper finger rotates eccentrically with respect to the second axis.

Particularly, the longitudinal axis extends along particularly parallel to the second axis of rotation of the corresponding second rotary body.

According to another embodiment of the invention, the gripper fingers each comprise a first end portion that is formed complementary to the connection device, particularly complementary to the locking device, so that each gripper finger forms a connection, particularly a rotationally fixed connection, with the corresponding connection device via the first end portion.

This embodiment allows for modular design of the gripper device system. For example, this embodiment allows for differing gripper finger designs that each comprise the identically-shaped first end portion for attaching the gripper finger to the connection device.

According to another embodiment of the invention, at least one of the gripper fingers comprises a gripping portion configured to grip an object by exercising a lateral torque on the object, such that the object is held by means of frictional forces with the gripper fingers.

Particularly, said gripping portion is arranged opposite to the first end portion.

The gripping portion may be made of a material that comprises increased frictional coefficients as for example compared to a body of the gripper finger.

According to another embodiment of the invention, the gripping portion of at least one of the gripping fingers comprises a gripping surface configured to grip an object in a flat manner, particularly such that a flat contact area between the gripping surface and the object is formed.

This embodiment allows securely grip and move objects with essentially corresponding flat surfaces, as a contact area may be increased by the flat contact area.

According to another embodiment of the invention, the gripping portion of at least one of the gripper fingers extends circumferentially or annularly around the gripper finger, particularly wherein the gripping portion is formed cylindrically or wherein the gripping portion has an annular shape, e.g. around the longitudinal axis of the gripper finger.

According to another embodiment of the invention, the gripping portion protrudes from a body of the gripper finger.

### Exemplary embodiments

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
- Fig. 1: shows a first perspective view of a schematic drawing of the gripper device system according to the invention;
- Fig. 2: shows a second perspective view of a schematic drawing of the gripper device system according to the invention;
- Fig. 3: illustrates a rectilinear transversal motion performed by the gripper device system according to the invention;
- Fig. 4: illustrates a rolling motion performed by the gripper device system according to the invention;
- Fig. 5: illustrates an essentially rectilinear transversal motion with oriented torque-receiving sections performed by the gripper device system according to the invention; and
- Fig. 6: shows two different embodiments of the connection and locking device.

It is noted that for sake of intelligibility, for entities, such as objects, components, elements, or devices of the same kind, only one or some of said multiple entities may be referenced with a reference sign. Entities of the same kind have the same appearance in the figures.

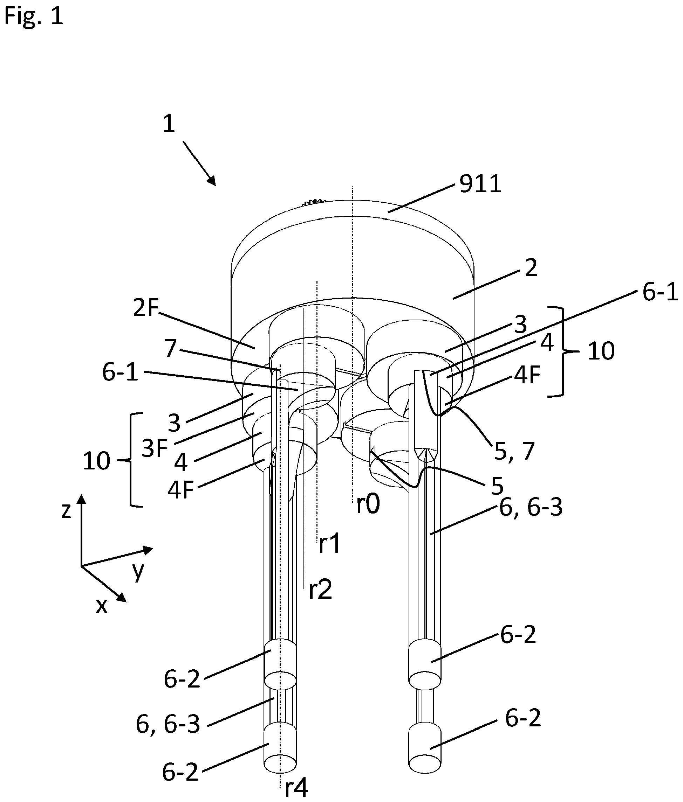

Fig. 1 shows an exemplary embodiment of the gripper device system 1 in a schematic perspective view. The description in the following may relate to other the figures as well that show the same or similar features.

A coordinate system (x, y, z) might be associated with the gripper device system 1 without limiting the generality of the invention. Of that coordinate system a z-direction extends orthogonally to a plane within which motions of the gripper device system 1 components may take place. Said plane might comprise an x- and y-axis (Cartesian coordinate system as shown by means of the arrows x, y, z) or may be considered as cylindrical coordinate system having a radius and an azimuthal angle as independent coordinates (not shown).

The base body 2 according to this example is formed as a cylindrical body, which at least partially houses a drive assembly 9-1, 9-2 for the system 1. The base body 2 is an element of the gripper device system 1 relative to which other components of the gripper device system 1 may move. These other components for example comprise the first and the second rotary bodies 3, 4 as well as gripper fingers 6.

The base body 2 comprises a front face 2F that faces along the z-direction, i.e. which extends along the x-y plane. The gripper device system 1 in this example comprises four first rotary bodies 3 that are arranged on the front face 2F of the base body 2.

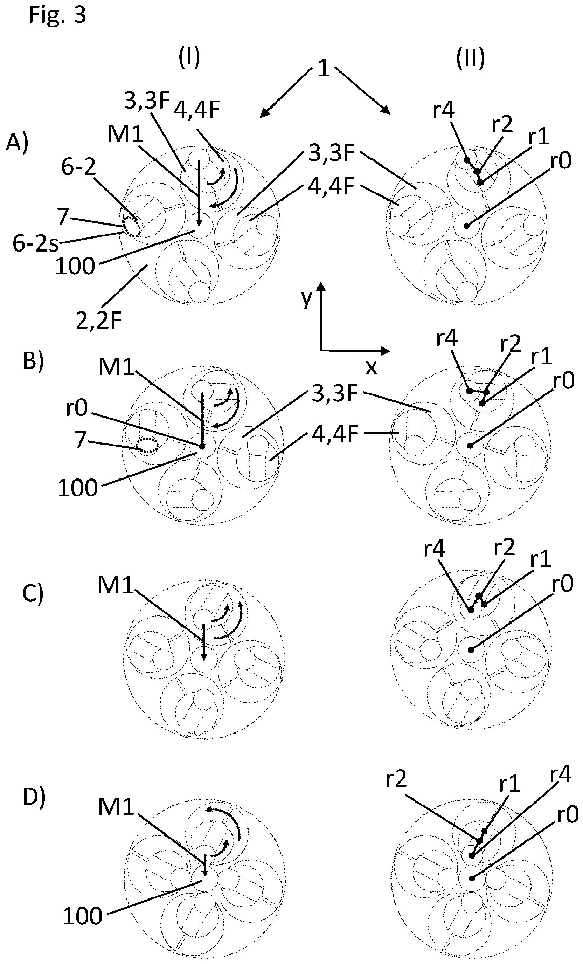

Each first rotary base body 3 is rotatable around a first axis of rotation r1 relative to the base body 2 (see for example Figs. 3 to 5). In this example, each first axis of rotation r1 extends parallel to the z-axis, and thus perpendicular to the front face 2F of the base body 2.

The first rotary bodies 3 are arranged in a square (cf. Figs. 3 to 5) with respect to the front face 2F of the base body 2. Particularly, intersections of the first axes of rotation r1 with the front face 2F of the base body 2 form the corners of said square. This allows for symmetric construction of the system 1 as well as symmetric control of any movable part of the gripper device system 1.

Each of the four first rotary bodies 3 is formed as a cylinder. Radius and height of the cylinders each are identical for each four first rotary bodies 3.

The first rotary bodies 3 are arranged on the front face 2F of the base body 2 such that they are laterally (i.e. in the x-y plane) confined within the front face of the base body 2. Therefore, the radius of each first rotary body 3 is more than four-times smaller than the radius of the base body 2.

The first axes of rotation r1 in this example extend centrally through the respective cylindrically-shaped first rotary bodies 3, i.e. each of the first axes of rotation coincides with a cylinder axis of the corresponding cylindrically-shaped first rotary body 3. Therefore, in case the first rotary bodies 3 are rotated, the first bodies 3 do not exhibit an eccentric motion pattern, but rotate around their respective cylinder axis.

The first rotary bodies 3 each comprise a front face 3F as well, that extends in a parallel plane to the front face 2F of the base body 2.

On each of the first rotary bodies 3 and the respective front faces 3F, a second rotary body 4 is arranged. In this example, the second rotary bodies 4 are also formed as identical cylinders, wherein a radius of each of the second rotary bodies 4 is smaller than the radius of the first rotary bodies 3. Therefore, the second rotary bodies 4 are laterally (i.e. in the x-y plane) confined within the front faces 3F of the first rotary bodies 3.

Each second rotary body 4 is rotatable around a second axis of rotation r2 that extends laterally shifted, i.e. eccentrically with respect to the first axis of rotation r1 of the first body 3 on which front face 3F the second rotary body 4 is arranged on.

The second axes of rotation r2 extend parallel to the z-direction as well, such that the second axes of rotation r2 and first axes of rotation r1 are parallel to each other.

It is noted that the second rotary bodies 4 are arranged such on the first rotary bodies 3 that they are rotatable relative to the first rotary bodies 3.

As a consequence of this specific assembly the second rotatory body 4 performs an eccentric motion around the first rotary axis r1 of its associated first rotary body 3, whenever said first rotary body 3 is rotated around its first axis of rotation r1. Simultaneously it is possible to rotate said second rotary body 4 around its second axis of rotation r2. This way to rotations that may be executed and performed independently of each other, may be combined to a cumulative motion of the second rotary body 4.

Each first and associated second rotary body 3, 4 form a rotary body assembly 10. Thus, the system 1 in the examples comprises four rotary body assemblies 10. It is obvious that systems 1 comprising one, two, three or more rotary body assemblies may be advantageous for differing application.

In the example of Fig. 1 and the other figures each second rotary body 4 comprises a connection device 5 that is formed as a recess in the cylindrical shape of the second rotary body 4. The recess extends centrally through the second axis of rotation r2 and covers a complete diameter of a (circular) front face 4F of the second rotary body 4.

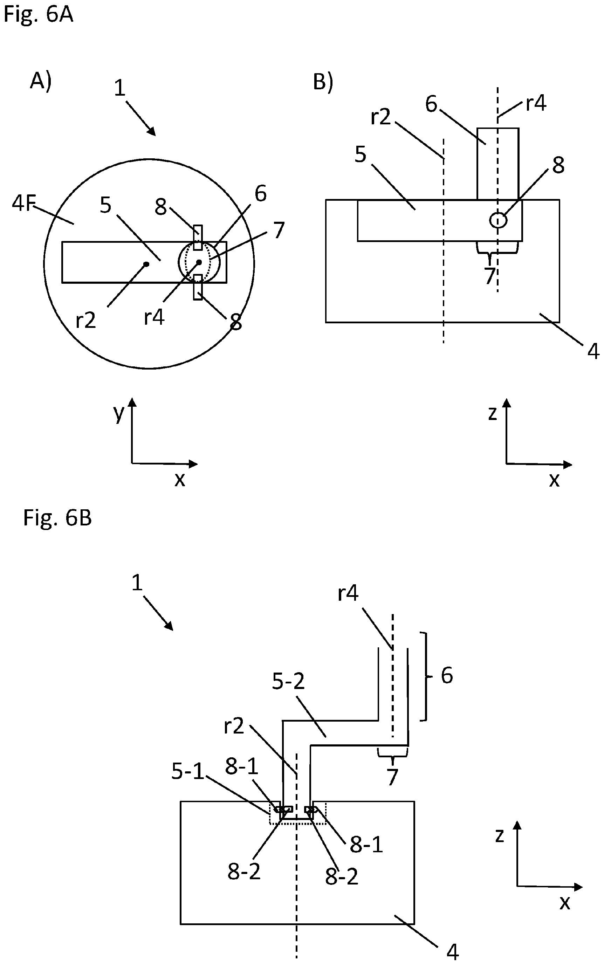

The connection device 5 in the example of Fig. 1 has a cuboid shape. However, the specific shape of the connection device 5 of Fig. 1 should not be considered as the only suitable shape or embodiment. It may be as well possible that the recess has a trapezoid cross-section, or a cross-section that for example allows a for a form-fitting slide-in mechanism for a gripper finger 6. The connection device 5 need not be a recess, or single-parted, but may be formed as a protrusion, a combination of a recess and a protrusion as well as by means of two separable entities (portions, cf. Fig. 6).

Importantly, the connection device 5 is formed such that a gripper finger 6 is attachable, particularly repeatedly releasably attachable to the connection device 5 or to a portion thereof, or such that a gripper finger 6 may be integrally or partially integrally formed with the connection device 5.

The connection device 5 further comprises a torque-receiving section 7. The torque-receiving section 7 is configured and located on the connection device 5 such that it may transmit and/or receive a torque either from the second rotary body 4 or via a gripper finger 6. The torque-receiving section 7 is a confined portion of the connection device 5 that, in case the second rotary body 4 is rotated around the second axis r2, performs an eccentric motion around the second axis r2. Typically, the torque-receiving section 7 is configured and shaped such that in case a gripper finger 6 is attached to the second rotary body 4, the gripper finger 4 performs an eccentric motion corresponding to the eccentric motion of the torque-receiving section 7.

The torque-receiving section 7 can be a section of the connection device 5 that comprises an intersection of a longitudinal axis r4 of the gripper finger 6 or an intersection of an elongated body portion of the gripper finger 6.

This allows to form a connection device 5 that is symmetrical with respect to the second rotary body 4 and nonetheless have a gripper finger 6 arranged such with respect to the second axis r2 of rotation that it performs an eccentric motion, when the second rotary body rotates 4 around its axis of rotation r2.

In the example of Fig. 1 the system 1 comprises gripper fingers 6 attached to each of the four connection devices 5 at the respective torque-receiving section 7.

The gripper fingers 6 comprise a first end portion 6-1 that is formed complementary to the connection device 5, such that the gripper finger 6 can be attached to the connection device 5. The connection device 5 may comprise a locking device (not shown) for fixing the gripper finger 6 to the second rotary body 4. Locking devices may be a screw or clamping connection between the second rotary body and the first end portion. Alternatively, or additionally, the locking device may comprise a releasable snap-lock connection and/or magnetic connection that provides a locking mechanism based on a magnetic force exerted between the second rotary body and the gripper finger 6. The latter allows for facile assembly of the fingers 6 to the respective second rotary bodies 4.

From the first end portion 6-1 the gripper finger 6 may extend along an elongated body portion 6-3 of the gripper finger 6, particularly wherein said elongated body portion 6-3 extends along the longitudinal axis r4 of the gripper finger 6. The longitudinal axis r4 may extend parallel to the first and/or second axis of rotation r1, r2, particularly parallel to the z-direction.

However, it is conceivable that the longitudinal axis r4 may be inclined with respect to the z-direction.

In the example of Fig. 1, adjoining to the elongated body portion 6-3, a gripping portion 6-2 is comprised by the gripper fingers 6. The depicted gripping portion 6-2 is a cylindrical cap that radially protrudes slightly from the elongated body portion 6-3. The surface 6-2s of the gripping portion 6-2, i.e. the cap may be formed from a selectable material that is suitable for gripping an object such as a glass vial, test tubes or any other object of suitable size.

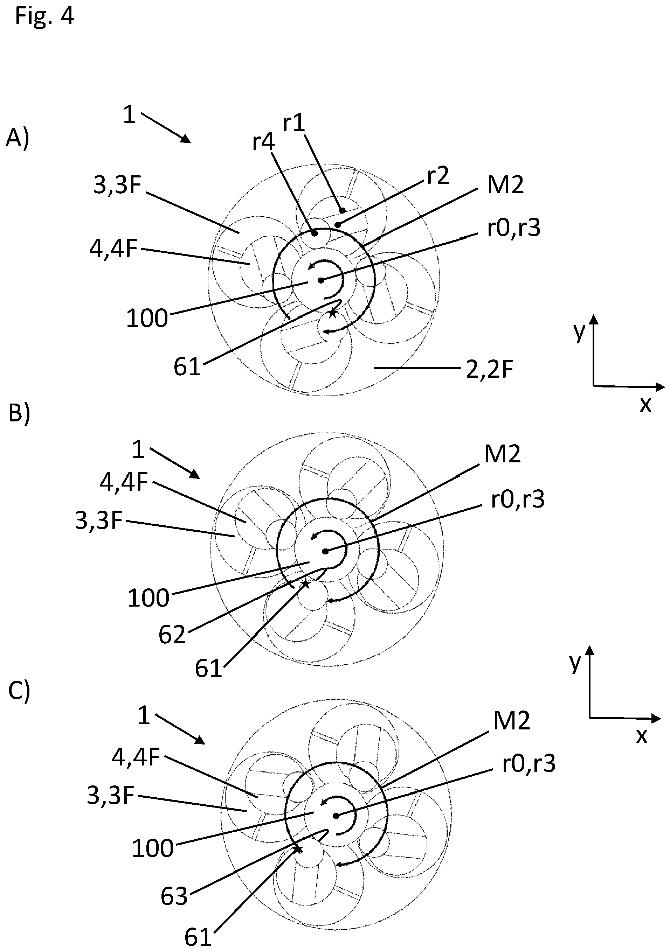

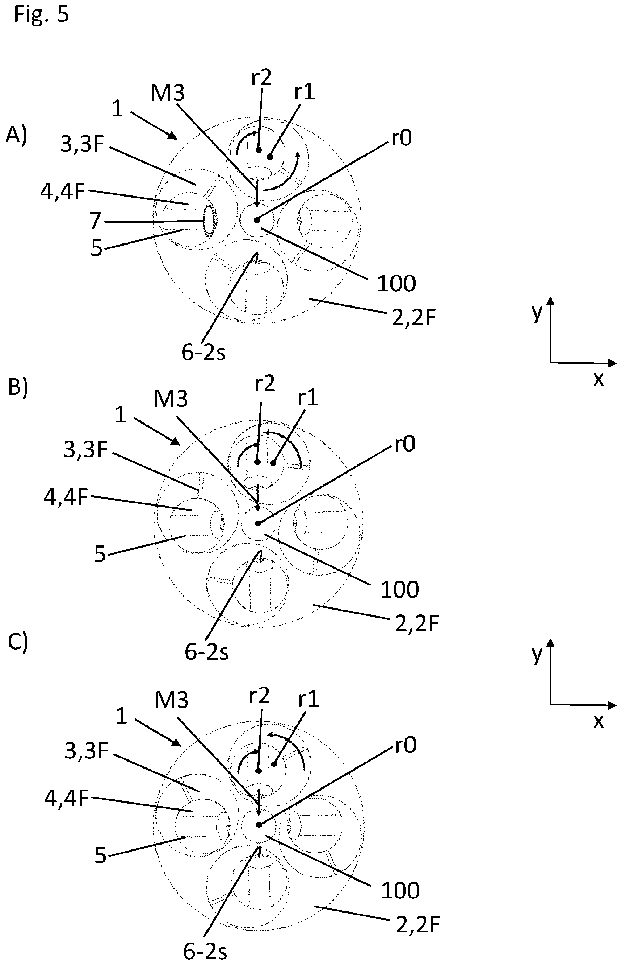

The system 1 in which each rotary body assembly 10 has their first and second rotary bodies 3, 4 as well as the torque-receiving sections 7 / gripper fingers 6 arranged as laid out in the preceding paragraphs allows for moving the gripper fingers 6 either independently or in a coordinated fashion along a variety of trajectories forming motion patterns that are particularly useful for robotic applications. Possible motion patterns include
- rectilinear translations M1 (cf. Fig. 3) along the x-y plane along any direction,
- a rolling motion M2 (cf. Fig. 4) during which the gripper fingers / torque receiving sections rotate at a selectable radius around a common roll axis, particularly wherein said roll axis may be a central axis that is arranged at a center of gravity of the first axes of rotation - in this case the center of gravity is at the intersection of the diagonals between opposing rotary body assemblies,
- an oriented motion M3 (cf. Fig. 5) that is essentially rectilinear, wherein during the oriented motion an orientation of each gripper finger remains unchanged, while it is translated towards or away from a common center of the rotary body assemblies, particularly the central axis.

These motions are discussed in the following in more detail. For sake of simplicity - without limiting generality the motions are described for a system having the gripper fingers 6 attached to the second rotary bodies 4. That is, when a motion is described for a gripper finger 6, the same motion applies and holds true for the torque-receiving section 7.

### Example of a Rectilinear Motion

In Fig. 3 a sequence of a rectilinear motion pattern M1 of the four gripper fingers 6 is shown from a bottom view of the system 1. The right and left columns for each panel show the same state of the system 1, but with different illustrative means to describe the motion M1.

In the left column (I), the curved arrows associated to the first and second rotary body 3, 4 qualitatively illustrate the rotation of the respective body 3,4 , wherein in right column (II), the same motion M1 is illustrated using a two-hinged motion illustrator, wherein a first hinge is fixed, and a first rigid arm extends between the first hinge and the second hinge, wherein a second arm extends from the second hinge to the center of the torque-receiving section 7, that may correspond to an intersection of the longitudinal axis r4 of the gripper finger 6 and thus suitable describes a lateral gripper finger motion/position. From the right column it may be instantly recognized that the second rotary axis r2 is eccentrically arranged with respect to the first axis of rotation r1, while the center r4 of the torque-receiving section 7 is eccentrically arranged with respect to the second axis of rotation r2. Also, by means of the two-hinged motion illustration possible motion patterns or positions of the torque-receiving section 7 may be determined more easily, as the first and second arm are virtually rigid, while the hinges may allow the arms to enclose any angle.

In Fig. 3 all gripper fingers 6 execute the same rectilinear motion M 1, toward a central axis r0 that is symmetrically located between the first axes of rotation r1, i.e. at the intersection of the diagonals of the square that is formed by the first axes of rotation r1.

At the central axis r0, a cylindrical object may be located that is to be gripped by the four gripper fingers 6.

In panel A) the four gripper fingers 6 are located at an outer position with regard to the central axis r0, wherein in panel B) the first and the second rotary body 3, 4 of each of the four rotary body assemblies 10 have been rotated such that the gripper fingers 6 are displaced along a straight line between the position of panel A) to an intermediate position. The amount of rotation necessary to evoke such rectilinear displacement of the gripper fingers 6 may be determined by way of relations between positions of the first and second axes of rotation as well as the center of the torque-receiving section.

In panel C) the four gripper fingers 6 have been translated further along the same straight line toward the central axis r0 by a corresponding rotation of the first and second rotary bodies 3, 4.

The rotation/orientation of each rotary body in Fig. 3 may be determined from the orientation indicators on the first rotary bodies 3, and the orientation of the connection device 5. The speed of the rectilinear motion may be controlled by the rotational speed of the rotary assemblies 10.

In panel D) the gripper fingers 6 come into contact with the object 100 along the rectilinear trajectory such that a gripping force is exerted on the object 100. Said gripping force is mediated by means of the torque-receiving section 7 of each second rotary body 4.

It is noted that in case the first drive assembly and the second drive assembly each drive all of the first and second rotary bodies the rectilinear motion is guided to or away from the central axis. In case the first and the second drive assemblies are configured to drive each of the first and the second rotary bodies independently, the direction of the rectilinear motion M1 is freely selectable to or away from any common point.

### Example of a rolling motion

In Fig. 4 a sequence illustrating a rolling motion M2 of the gripper device system 1. The initial situation is given by the four gripper fingers 6 having gripped an object that is centrally arranged on the central axis c3, cr. Each gripper finger 6 comprises a gripping portion 6-2 that is cylindrical and thus in the bottom view shown in Fig. 4 said cylindrical gripping portions 6-2 manifest as circles. In panel A) each gripping portion 6-2 contacts the object 100 at a first gripping surface portion 61 of the gripping portion 6-2. When the first and the second rotary bodies 3, 4 are rotated accordingly, the gripper fingers 6 perform a rotation around the central axis r0, r3, at the same angular speed (see panel B)). Therefore, the object 100 that is held by the gripping portions 6-2 rotates with the same speed as the gripper fingers 6 rotate around the central axis r0, r3. This rotation in turn causes a different gripping surface portion 62 to be in touch with the object 100. For this reason, a cylindrical or annular gripping portion may be advantageous over other shapes of gripping portions.

In panel C) the rotation of the gripping fingers 6 and thus the object 100 is set forth, such that the object 100 is rotated even further. This kind of motion is referred to as a rolling motion M2 in the context of current specification.

The rolling motion M2 may be set forth for an unlimited number of turns and may be executed either clock- or anticlockwise. The rolling motion M2 allows for a mixing/shaking of the object, e.g. by repeatedly and rapidly performing clock- and anticlockwise rolling motions M2.

It is noted that in case the first drive assembly and the second drive assembly 10 each drive all of the first and second rotary bodies 3, 4 the rolling motion M2 is centered around the central axis r0. In case the first and the second drive assemblies 9-1, 9-2 are configured to drive each of the first and the second rotary bodies 3, 4 independently, the center r3 of the rolling motion M2 is freely selectable.

### Example rectilinear motion with fixed gripping surface orientation

In Fig. 5 an at least partially rectilinear motion M3 of the gripper fingers 6 is exemplarily depicted in which the gripper fingers remain at a predefined orientation.

From the bottom view it is evident, that the gripping portion 6-2 of the gripper fingers 6 differs from Fig. 1, Fig. 3 and 4. In this example, the gripping portion 6-2 comprises a flat and planar surface area that forms the gripping surface 6-2s. Each of the surfaces 6-2s may be oriented e.g. by means of a surface vector that points perpendicularly away from the gripping surface 6-2s. As can be seen in panel A) of Fig. 5, at an initial position of the gripper fingers, the gripping surfaces are oriented toward the central axis r0 at an initial distance to said central axis r0.

In panel B) the gripper fingers 6 have moved toward the central axis r0 is an essentially rectilinear fashion, while the orientation of the gripping surfaces 6-2s remained oriented toward the central axis r0. Similarly, in panel C) the gripper fingers 6 have moved even closer to the central axis r0 and the orientation of the gripping surfaces is unaltered.

This specific motion M3 is advantageous for gripping motions of objects that are preferably be held by means of a planar flat surface area, i.e. by means of in increased contact area, which in turn translates to an increased friction between gripper finger 6 and object 100, such that heavier objects may be held and manipulated.

It is noted that the gripper fingers 6 due to slight constraints of the possible motions resulting from two eccentric motions may not perfectly move along a straight line, but perform a slightly inclined motion that is however marginal, in terms of the desired application.

### Example of a Drive Assembly of the System

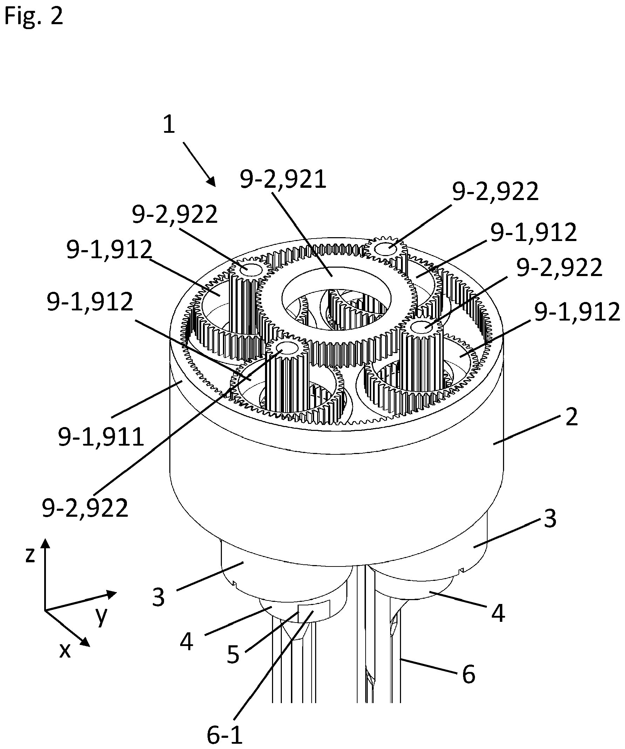

In Fig. 2 a perspective view of the system is illustrated, wherein in this view the first and the second drive assemblies 9-1, 9-2 are depicted.

The first drive assembly 9-1 is configured to rotate all four of the first rotary bodies 3 dependently of each other, i.e. to the same degree.

The second drive assembly 9-2 is configured to rotate all four of the second rotary 4 bodies dependently of each other, i.e. to the same degree.

The first drive assembly 9-1 comprises and outer toothed ring 911 with teeth pointing inward the ring 911. Said outer toothed ring 911 is rotatable with respect to the base body 2 and a motor of the first drive assembly (not shown) 9-1 may be configured to rotate this outer toothed ring 911. In the exemplary embodiment, the outer toothed ring 911 has the same diameter as the diameter of the cylindrical base body 2. The outer toothed ring 911 is engaged with four inner toothed rings 912 having teeth pointing outwards of their respective ring 912. Upon rotation of the outer toothed ring 911 the four inner rings 912 may turn accordingly with the accorded gear ratio. The inner tooth rings 912 are rigidly connected (not shown) to one of the first rotary bodies 3, such that upon rotation of the inner rings 912 the first rotary bodies 3 rotate accordingly around their respective first axis of rotation r1.

In order to rotate the second rotary bodies 4 relative to the first rotary bodies 3 in an independent fashion, a second drive assembly 9-2 is comprised by the system 1 that is configured to rotate all of the second rotary bodies 4 in a dependent fashion however independently of the rotation of the first rotary bodies 3. The second drive assembly 9-2 in the example of Fig. 2 comprises a central toothed ring 921 having teeth pointing outwards the central ring 921. The central toothed ring 921 engages with four racks 922 that in turn each engage with a toothed ring that is a located closer to the front of the base body 2. These four toothed rings (only partially visibly in Fig. 2) are fixedly connected to the second rotary body 4. Such that when the central ring 921 is rotated e.g. by means of a motor of the second drive assembly 9-2, the four second rotary bodies 4 perform a rotary motion. The specific way of engagement of the central toothed ring 921, the racks 922 and the four tooth rings of the second drive assembly 9-2 allows for the eccentric motion of the second rotary bodies 4 with respect to the first rotary bodies 3, while still being able to rotate the second rotary bodies 4 around their respective second axes of rotation r2, which in essence wander around the associated first axis of rotation r1.

The example of Fig. 2 illustrates an embodiment, in which all four first rotary bodies 3 may be rotated by a single motor of the first drive assembly 9-1. Hence, rotation of the first rotary bodies 3 depends of each other. Similarly, all four second rotary bodies 4 may be rotated by a single motor of the second drive assembly 9-2. Hence, rotation of the second rotary bodies 4 depends of each other. However, due to the first and the second drive assemblies 9-1, 9-2 being motorized independently of each other, the rotation of the second rotary bodies 4 around their second axis r2, is not dependent on the rotation of the first rotary bodies 3, and vice versa.

This allows for the motion patterns illustrated in the Figs. 3 to 5.

In case the first rotary bodies 3 are to be rotated independently of each other, accordingly the first drive assembly 9-1 would comprise components, such as a second or more motors for independent rotation of some or all of the first rotary bodies 3. The same applies for an independent rotation of the second rotary bodies 4. In case the second rotary bodies 4 are to be rotated independently of each other, accordingly the second drive assembly 9-2 would need reconfiguration, e.g. a second or more motors for independent rotation of some or all of the second rotary bodies 4 around the second axis r2.

In case the first rotary bodies 3 are to be rotated independently of each other, accordingly the first drive assembly 9-1 would comprise components, such as a second or more motors for independent rotation of some or all of the first rotary bodies 3.

Even though all illustrated examples depict the specific case of a system 1 according to the invention having four rotary body assemblies, it is unambiguously and clearly derivable for the skilled person that said examples may be generalized to two, three or more rotary body assemblies, with the respective number of rotary bodies, and geometric considerations.

In Fig. 6A a first embodiment of a connection device 5 and a locking device 8 according to the invention is depicted in a bottom view (panel A) and a side view (panel B).

The connection device 5 extends from the second axis of rotation r2 toward an axis r4 of the gripper finger 6. The gripper finger 6 connects with the connection device 5 at the torque-receiving section 7. There, the locking device 8 is configured to engage with end portion of the gripper finger, such as to lock the gripper finger in place. The locking device may be formed as screws or bolts.

In Fig 6B another embodiment of the connection device is schematically shown in a side view. The second rotary body 4 extends around the second axis of rotation r2. At the second axis of rotation the second rotary body comprises a receptacle 8-1 of the locking device 8. The locking device 8, as well as the connection device 5, consists of two parts or portions. The first portion 5-1 of the connection device 5 is comprised in the second rotary body 4 and comprises the first portion 8-1 of the locking device 8. The first portion 8-1 of the locking device 8 comprises said receptacle. The second portion 5-2 of the connection device 5 comprises the second portion 8-2 of the locking device 8, which is configured and adapted to repeatedly releasably engage with the first portion of the locking device 8. The second portion of the connection device 5 further comprises an L-shaped support body 5-2, which extends radially away with one of the L-shaped support arms from the second axis of rotation r2. Integrally formed with the support body 5-2 the gripper finger 6 extends along a finger axis r4 that is parallel to the second axis of rotation r2. At the interface of the gripper finger 6 and the support body 5-2 the torque-receiving section 7 is located eccentrically with respect to the second axis of rotation r2.

The invention allows for a broad range of common gripping motion patterns of grippers, particularly rectilinear motions that are achieved without any translational drive or gear, particularly only with gears configured for rotational motion being comprised in the system, which in turn allows for a compact and versatile gripper device system 1.

### Reference signs

- 1: System
- 2: base body
- 2F: front face of base body
- 3: first rotary body
- 3F: front face of first rotary body
- 4: second rotary body
- 4F: front face of second rotary body
- 5: connection device
- 5-1: first portion of connection device
- 5-2: second portion of connection device
- 6: gripper finger
- 6-1: first end portion of gripper finger
- 6-2: gripping portion
- 6-2s: surface of gripping portion
- 6-3: elongated finger portion
- 7: torque-receiving section
- 8: locking device
- 8-1: first portion of locking device
- 8-2: second portion of locking device
- 9-1: first drive assembly
- 9-2: second drive assembly
- 10: rotary body assembly
- 61, 62, 63: different portions of the gripping surface
- 911: outer toothed ring
- 912: inner ring of first drive assembly
- 921: central toothed ring of second drive assembly
- 922: rack of second drive assembly
- 100: object
- M1: rectilinear motion
- M2: rolling motion
- M3: oriented motion
- r0: central axis
- r1: first axis of rotation
- r2: second axis of rotation
- r3: roll axis
- r4: finger axis
- x,y,z: coordinates of Cartesian coordinate system

## Claims

1. A gripper device system (1) comprising the following components:
- a base body (2),
- at least two rotary body assemblies (10), each rotary body assembly (10) comprising a first rotary body (3) and a second rotary body (4) ,
- wherein each first rotary body (3) comprises a first axis of rotation (r1) about which the first rotary body (3) is rotatable relative to the base body (2), and each second rotary body (4) comprises a second axis of rotation (r2) about which the second rotary body (4) is rotatable relative to the first rotary body (3) of the respective rotary body assembly (10),
- wherein the second axis of rotation (r2) of the second rotary body (4) is arranged eccentrically relative to the first axis of rotation (r1) of the first rotary body (3) of the respective rotary body assembly (10),
- wherein the system (1) comprises a connection device (5) for each second rotary body (4), wherein the connection device (5) is adapted to at least partially form or to have attached to it a gripper finger (6), wherein each connection device (5) comprises a torque-receiving section (7) at which a gripper finger (6) is attachable or at which a gripper finger (6) extends from, wherein the torque-receiving section (7) is arranged eccentrically with respect to the second axis of rotation (r2) of the respective second rotary body (4), and wherein the torque-receiving section (7) is adapted to receive a torque with respect to the second axis of rotation (r2) when gripping an object with the gripper device system (1),
- wherein the gripper device system (1) further comprises a first drive assembly (9-1) adapted to rotate each first rotary body (3) around its first axis of rotation (r1),
- wherein the gripper device system (1) comprises a second drive assembly (9-2) adapted to rotate each second rotary body (4) around its second axis of rotation (r2),
**characterised in that**
the first and second drive assemblies (9-1, 9-2) are arranged to rotate the first rotary bodies (3) and the second rotary bodies (4) of the rotary body assemblies (10) independently of each other so that each torque-receiving section (7) performs a rectilinear translational motion (M1), when the first and second rotary bodies (3, 4) are rotated accordingly.

2. The gripper device system (1) according to claim 1, wherein the first and the second drive assemblies (9-2) are arranged to rotate the first rotary bodies (3) and the second rotary bodies (3) such that the torque-receiving sections (7) perform a rolling motion (M2) about a common roll-axis (r3), when the first and second rotary bodies (3, 4) are rotated accordingly.

3. The gripper device system (1) according to claim 1 or 2, wherein each connection device (5) is associated with an orientation at least along a radial direction, wherein the first and the second drive assemblies are arranged to rotate the first rotary bodies and the second rotary bodies such that the orientation of each connection device remains unchanged when performing a translational motion (M3), particularly when performing a rectilinear translational motion.

4. The gripper device system according to one of the preceding claims, wherein the first drive assembly (9-1) comprises a motor adapted to rotate all of the first rotary bodies.

5. The gripper device system according to one of claims 1 to 3, wherein the first drive assembly comprises a plurality of motors configured and arranged to independently and individually rotate one or more first rotary bodies of the first rotary bodies, or wherein the motors are configured and arranged to rotate the first rotary bodies in pairs.

6. The gripper device system according to any one of the preceding claims,
wherein the second drive assembly comprises a motor adapted to rotate all of the second rotary bodies.

7. The gripper device system according to any one of claims 1 to 5, wherein the second drive assembly comprises a plurality of motors configured and arranged to independently and individually rotate one or more second rotary bodies of the second rotary bodies, or wherein the motors are configured and arranged to rotate the second rotary bodies in pairs.

8. The gripper device system according to any one of the preceding claims,
wherein at least one connection device (5), particularly all connection devices, comprises or comprise a locking device (8) configured to rigidly attach a gripper finger (6) to the corresponding second rotary body (4), such that the gripper finger (6) rotates eccentrically with respect to the second axis of rotation (r2) of the corresponding second rotary body (4), wherein a torque received by the gripper finger (6) is relayed to the torque-receiving section (7) of the connection device (5).

9. The gripper device system (1) according to claim 8, wherein the locking device (8) of each second rotary body comprises a first portion (8-1) and a complementary second portion (8-2) that form the locking device, wherein the first portion (8-1) of the locking device (8) is comprised by or arranged on the second rotary body (4), and wherein the second portion (8-2) is comprised in a corresponding gripper finger (6) at a first end portion (6-1) of the gripper finger (6), so that each gripper finger (6) forms a connection, particularly a rotationally fixed connection, with the second rotary body (4) when the first and the second portion (8-1, 8-2) of the locking device (8) are connected.

10. The gripper device system according to claim 9, wherein the second portion (8-2) of the locking device (8) comprises the torque-receiving section (7).

11. The gripper device system according to any one of preceding claims, wherein the system comprises at least one gripper finger (6), or wherein the system comprises a gripper finger for each connection device of the system.

12. The gripper device system according to claim 11, wherein to each second rotary body, a gripper finger is attached, such that each gripper finger rotates eccentrically with respect to the corresponding second axis of rotation, wherein a torque received by the gripper finger is relayed to the torque-receiving section of the connection device, and/or wherein the gripper fingers are integrally formed with the corresponding connection device of the second rotary body.

13. The gripper device system according to claim 11 or 12, wherein at least one of the gripper fingers (6) comprises a gripping portion (6-2) configured to grip an object (100) by exercising a lateral torque on the object (100), particularly such that the object is held by means of frictional forces.

14. The gripper device system according to claim 13, wherein the gripping portion of at least one of the gripping fingers comprises a gripping surface (6-2s) configured to grip an object in a flat manner, particularly such that a flat contact area between the gripping surface (6-2s) and the object is formed.

15. The gripper device system according to one of the claims 11 to 14, wherein the gripping portion (6-2) of at least one of the gripper fingers extends circumferentially or annularly around the gripper finger, particularly wherein the gripping portion is formed cylindrically or wherein the gripping portion has an annular shape.
